# EUROPÄISCHE PATENTSCHRIFT

(11) **EP 2 195 565 B1**
(45) Veröffentlichungstag und Bekanntmachung des Hinweises auf die Patenterteilung: **20.07.2016**
(21) Anmeldenummer: 08802556.4
(22) Anmeldetag: 24.09.2008
(51) Int. Cl.: F16K 27/00, F16K 31/08

(54) **ANORDNUNG VON ANGEREIHTEN MAGNETANTRIEBEN**
ARRANGEMENT OF STRINGED SOLENOID DRIVES
ENSEMBLE DE COMMANDES MAGNÉTIQUES RACCORDÉES EN SÉRIE

(30) Priorität: 01.10.2007 DE 202007013709 U
(43) Veröffentlichungstag der Anmeldung: 16.06.2010
(73) Patentinhaber: Bürkert Werke GmbH, 74653 Ingelfingen (DE)
(72) Erfinder: BEYER, Olaf, 01239 Dresden (DE); BRUST, Claus, 74575 Schrozberg (DE); KÜNZLER, Rainer, 74653 Künzelsau (DE); MÜLLER, Simone, 74243 Langenbrettach (DE); SCHEIBE, Ralf, 74653 Künzelsau (DE)
(74) Vertreter: Prinz & Partner mbB
(86) Internationale Anmeldenummer: PCT/EP2008/008078
(87) Internationale Veröffentlichungsnummer: WO 2009/046871

(56) Entgegenhaltungen:
- EP-A- 0 225 388
- DE-A1- 19 735 560
- DE-U1-202006 006 825
- US-A1- 2002 175 580

## Beschreibung

Die Erfindung betrifft eine Anordnung von angereihten Magnetantrieben.

In verschiedenen Bereichen werden Anlagen eingesetzt, bei denen mehrere Magnetkreise in gegenseitigem Beeinflussungsbereich zueinander stehen können, ohne dass sich magnetisierbare Teile direkt berühren. Das ist z.B. der Fall, wenn mehrere Magnetventile aneinander gereiht werden.

Je kleiner die Magnetventile von ihren äußeren Abmessungen her sind und je enger diese aus Platzgründen neben einander angeordnet werden sollen, um so mehr kann es zu unerwünschter gegenseitiger Beeinflussung der Magnetkreise kommen.

Dabei kommt es zu Energieverlusten. Magnetischer Fluss bleibt nicht innerhalb eines Geräts sondern fließt für dieses Gerät kraftunwirksam über benachbarte, magnetisch leitfähige Metallteile ab oder wird auf benachbarte Magnetkreise umgeleitet.

Im ungünstigsten Fall kann es vorkommen, dass ein Ventil bei Schalten seines Nachbarventils ungewollt mitschaltet.

Nebeneinander angeordnete Magnetventile benötigen daher zum Schalten eine höhere Spannung oder sind gar nicht mehr ansprechbar.

Beispielsweise ist aus der DE 20 2006 006825 U1 eine Anordnung von angereihten Magnetantrieben von miniaturisierten Magnetventilen bekannt, wobei jeder Magnetantrieb einen Magnetkreis mit Joch, beweglichem Anker und auf dem Joch aufgebrachter Erregerwicklung aufweist.

Aufgabe der Erfindung ist es, eine Anordnung bereitzustellen, mit der aneinander gereihte Magnetventile bei minimal aufgewendeter Energie verlässlich geschaltet werden können.

Die erfindungsgemäße Anordnung dient zum Reduzieren des Streuflusses zu benachbarten Magnetkreisen und ermöglicht verlässliches Schalten von aneinander gereihten Magnetventilen bei minimal aufgewendeter Energie.

Gegenstand der Erfindung ist eine Anordnung von angereihten Magnetantrieben, insbesondere für Magnetventile, wobei jeder Magnetantrieb einen Magnetkreis mit Joch, beweglichem Anker und auf dem Joch aufgebrachter Erregerwicklung aufweist. Die Magnetkreise benachbarter Magnetantriebe weisen eine Vormagnetisierung in gleicher Polarität und von zumindest annähernd gleicher Stärke auf. Durch die Vormagnetisierung wird die magnetische Potentialdifferenz zwischen benachbarten Magnetkreisen reduziert. Die Vormagnetisierung erfolgt also in gleicher Polarität wie die Erregung durch Stromfluß in der Erregerwicklung.

Es ist an sich bekannt in einem Magnetventil eine Anfangsbestromung bereit zustellen, um schnelle Schaltzeiten zu ermöglichen. Der gleiche Effekt kann mittels Vormagnetisierung durch Einsetzen eines Dauermagneten im Magnetkreis erreicht werden. Die hier beschriebene spezielle Art einer Vormagnetisierung dient aber dazu, den magnetischen Potentialunterschied zwischen benachbarten Magnetkreisen möglichst niedrig zu halten. Zwischen zwei Magnetkreisen besteht ein magnetischer Potentialunterschied, wenn ein Magnetkreis geringer magnetisiert ist, gar nicht oder gegenläufig magnetisiert ist als der andere.

Die Vormagnetisierung kann mit Permanentmagneten oder auch durch eine Beaufschlagung der Erregerwicklungen mit einem Sockelstrom in Höhe eines Bruchteils des normalen Erregerstroms erfolgen.

Alternativ wird die Vormagnetisierung durch ein externes Magnetfeld erzeugt, das für alle benachbarten Magnetkreise dasselbe ist.

Die Erfindung wird anhand der beigefügten Zeichnungen näher beschrieben. In den Zeichnungen zeigen:

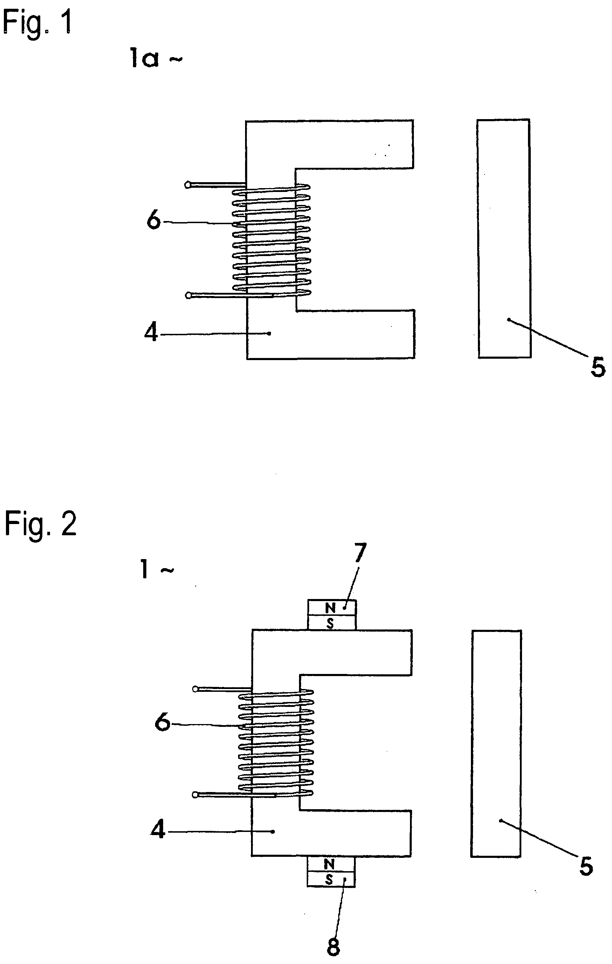

- Figur 1 einen Magnetkreis, wie er üblicherweise in Magnetventilen zur Anwendung kommt;
- Figur 2 eine erste erfindungsgemäße Anordnung von Permanentmagneten an einem Magnetkreis;
- Figur 3 mehrere (beispielsweise drei) gleiche eng benachbarte Magnetkreise.
- Figur 4 schematisch die magnetischen Widerstände an den eng benachbarten Magnetkreisen von Fig. 3;
- Figur 5a eine schematische Darstellung eng aneinander gereihter Magnetkreise mit Vormagnetisierung, aber ohne Stromfluss;
- Figur 5b eine schematische Darstellung derselben Magnetkreise mit Vormagnetisierung und Stromfluss in den äußeren Magnetkreisen;
- Figur 5c eine schematische Darstellung derselben Magnetkreise ohne Vormagnetisierung, aber mit Stromfluss in den äußeren Magnetkreisen;
- Figur 6 erfindungsgemäße Anordnung eines hufeisenförmigen Permanentmagneten an einem U-förmigen Joch; und
- Figur 7 erfindungsgemäße Anordnung eines Stabmagneten an einem doppel-T-förmigen Joch.

Der herkömmliche Magnetkreis 1a besteht aus einem hufeisenförmigem Joch 4, einer Wicklung 6 und einem Anker 5.

Der Magnetkreis 1 besteht ebenfalls aus Joch 4, Wicklung 6 und Anker 5. Zusätzlich sind auf den Schenkeln des Jochs 4 mindestens zwei Dauermagnete 7 und 8 angeordnet, wobei die Polarisierung dieser Dauermagnete an deren Kontaktierungsseite zum Schenkel hin einander entgegengesetzt ist.

Der Dauermagnet 7 kontaktiert den einen Jochschenkel mit seiner Südpolseite und der Dauermagnet 8 den anderen Schenkel mit seiner Nordpolseite.

Die Dauermagnete 7 und 8 können entweder beide an den Außenseiten der Jochschenkel sitzen oder beide an den Innenseiten.

Zur Verstärkung des Effektes können auf jedem Schenkel mehrere Magnete mit jeweils gleicher Polarisierungsrichtung angeordnet sein.

Anstelle die oben beschriebene Vormagnetisierung der aneinandergereihten Magnetkreise mittels Dauermagnete zu realisieren, kann auch mit Hilfe von Anfangsbestromumg gearbeitet werden.

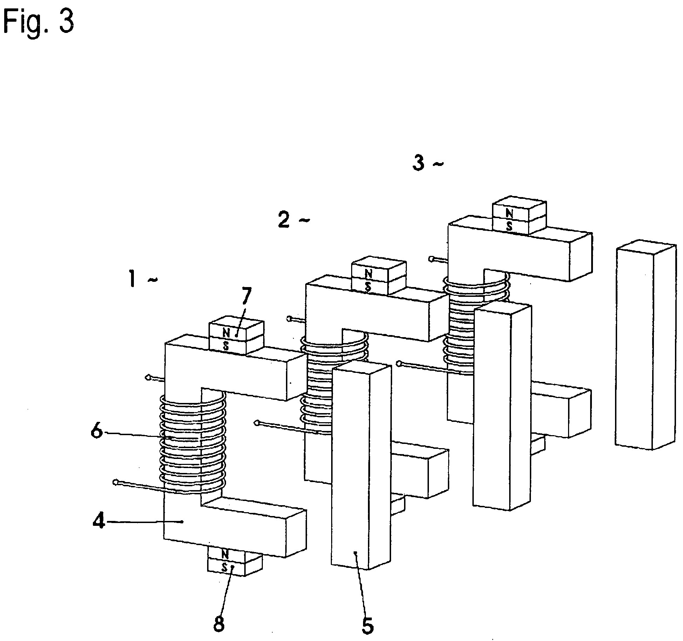

In Fig. 3 sind mehrere (beispielsweise drei) identische Magnetkreise nebeneinander in eng benachbarter Anordnung dargestellt. Die Abstände zwischen den einzelnen Magnetkreisen 1, 2 und 3 sind in praktischer Anwendung minimal - also kleiner als in Fig. 3 gezeigt. Die Magnetkreise gehören insbesondere zu miniaturisierten Magnetventilen.

Wird im Magnetkreis 2 die Wicklung 6 mit Strom beaufschlagt während die Wicklungen 6 der beiden Magnetkreise 1 und 3 ohne Strom bleiben, so wird das Joch 4 des Magnetkreises 2 aus magnetischem Material magnetisiert und zieht den Anker 5 des Magnetkreises 2 - ebenfalls aus magnetischem Material - an.

Die Joche 4 in den benachbarten Magnetkreisen 1 und 3 sind durch die Dauermagnete 7 und 8 vormagnetisiert.

Dadurch ist der Potentialunterschied innerhalb des Magnetkreises 2 zwischen Joch 4 und Anker 5 größer als der Potentialunterschied des Jochs 4 vom Magnetkreis 2 und den Jochen 4 aus den benachbarten Magnetkreisen 1 und/ oder 3.

Folglich schaltet nur Magnetkreis 2 und nicht die beiden benachbarten Magnetkreise 1 und 3.

Ein Streufluss aus Magnetkreis 2 zu Magnetkreis 1 oder 3 findet idealer Weise nicht statt oder ist zumindest stark reduziert.

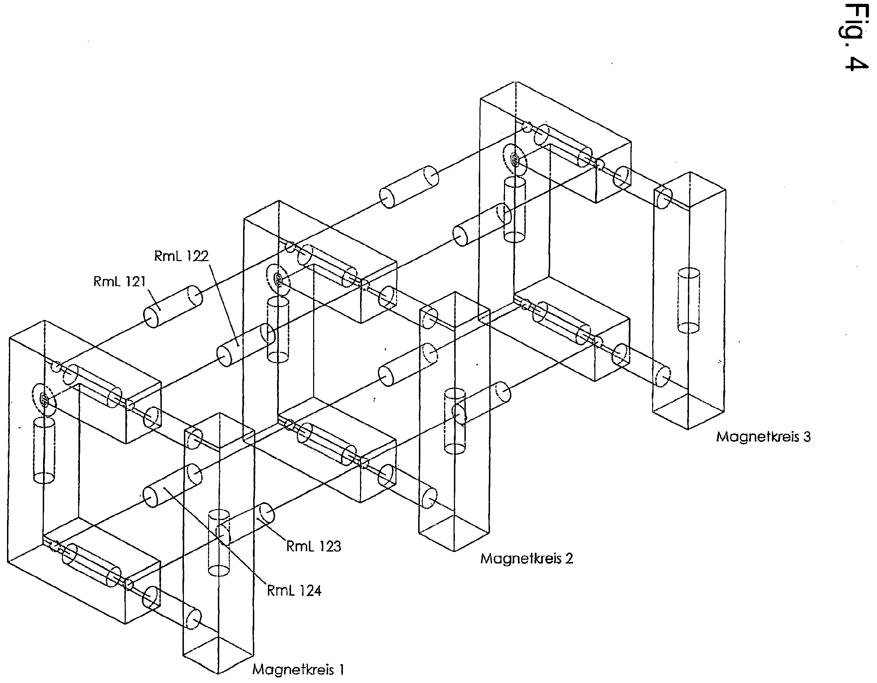

In Fig. 4 sind die wirksamen Magnetwiderstände an und zwischen den Magnetkreisen schematisch dargestellt. Von Interesse sind hier die Luftspaltwiderstände zwischen benachbarten Magnetkreisen. Für die Magnetkreise 1 und 2 sind die Luftspaltwiderstände zwischen einander gegenüberliegenden Jochschenkeln mit RmL121, RmL122 sowie RmL123, RmL124 bezeichnet. Zwar sind die magnetischen Luftspaltwiderstände proportional zum Abstand, aber auch umgekehrt proportional zum Flächeninhalt der einander gegenüberliegenden Flächen. Da die Abstände klein und die Flächen relativ groß sind, ist der magnetische Luftspaltwiderstand entsprechend gering.

Durch eine gleichgepolte Vormagnetisierung mit Dauermagneten wird zwar eine geringe Schliesskraft erzeugt, diese ist (bei entsprechender Auslegung der Dauermagnete) jedoch nicht ausreichend, um den Anker anziehen zu lassen.

Der Vorteil der gleichgepolten Vormagnetisierung mit Dauermagneten liegt jetzt aber darin, dass beim Schalten benachbarter Geräte sich quasi kein Streufluss zwischen den Geräten mehr ausbildet. Dies liegt daran, dass immer gleichnamige Polflächen gegenüberstehen (und das unabhängig davon ob die Geräte bestromt sind oder nicht!) , zwischen denen kein magnetischer Fluss zustande kommt.

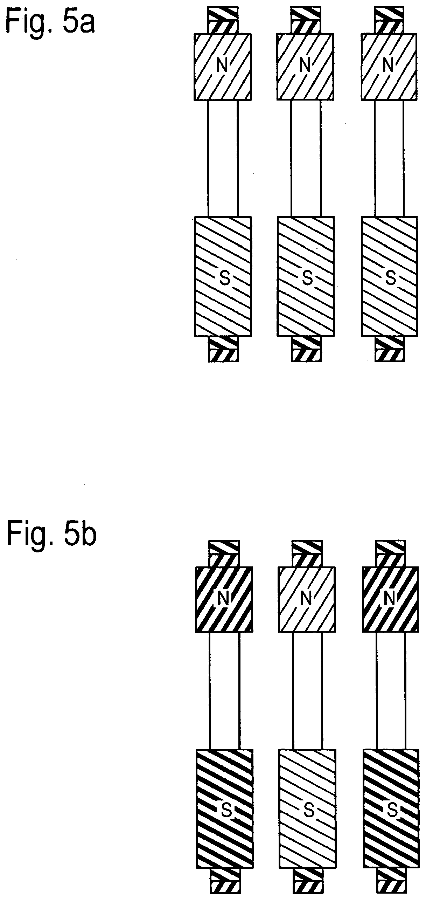

Die Fig. 5a zeigt schematisch drei eng aneinander gereihte Magnetkreise mit Vormagnetisierung in gleicher Richtung und Stärke, aber ohne Stromfluss. Die Richtung der Schraffur zeigt die Polung und die Dichte der Schraffur die Stärke des magnetischen Flusses. Durch die Vormagnetisierung bildet sich ein geringer magnetischer Fluss in den Eisenkreisen aus. Dieser ist aber zu schwach, um den Anker der Magnetkreise anziehen zu lassen.

In Fig. 5b ist angenommen, dass die beiden äußeren Magnetkreise bestromt sind, nicht aber der mittlere. Bei den äußeren Magnetkreisen bildet sich ein starker Magnetfluss aus, der die Anker anziehen läßt. Im mittleren Magnetkreis bildet sich kein oder nur ein sehr geringer Streufluss aus, da durch die Vormagnetisierung sich immer noch gleichnamige Pole - wenngleich unterschiedlicher Stärke - gegenüber stehen. Es findet praktisch kein Feldlinienübergang zwischen Nord- und Südpolen statt.

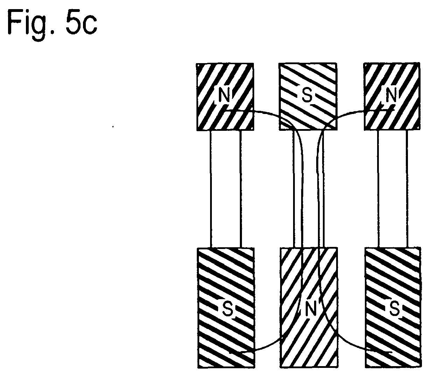

In Fig. 5c sind wieder die beiden äußeren Magnetkreise bestromt, jedoch ist keine Vormagnetisierung vorhanden. Bei den äußeren Magnetkreisen bildet sich ein starker Magnetfluss, der den Anker anziehen lässt. Aufgrund des geringen Abstandes der Polflächen zwischen den Magnetkreisen schließen sich jedoch auch Feldlinien über den mittleren Magnetkreis, es entsteht Streufluss. Am mittleren Magnetkreis entsteht eine magnetische Polung, die zu den äußeren Magnetkreisen entgegengesetzt ist, jedoch im ungünstigen Fall ausreichen kann um den Anker des Mittelgerätes anziehen zu lassen obwohl der mittlere Magnetkreis unbestromt ist.

Unter diesen Umständen erweist sich die erfindungsgemäß vorgeschlagene Vormagnetisierung aller aneinander gereihten Magnetkreise als sehr wirksam zur Verminderung der magnetischen Streufelder durch Reduzierung der magnetischen Potentialunterschiede zwischen benachbarten Magnetkreisen..

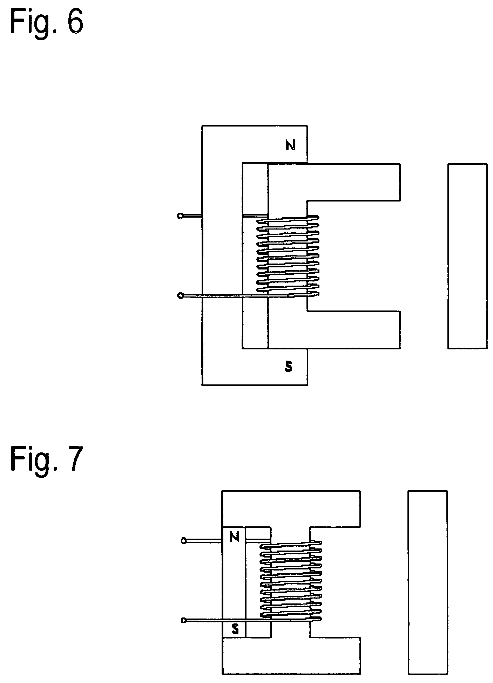

In einer weiteren, in Fig. 6 gezeigten Ausführungsform ist das U-förmige Joch von einem größeren hufeisenförmigen Dauermagnete umgeben.

Bei der in Fig. 7 gezeigten Ausführungsform ist das Joch doppel-T-förmig. In dem doppel-T-förmigen Joch ist ein Stabmagnet angeordnet.

## Patentansprüche

1. Anordnung von angereihten Magnetantrieben von miniaturisierten Magnetventilen, wobei jeder Magnetantrieb einen Magnetkreis (1, 2, 3) mit Joch (4), beweglichem Anker (5) und auf dem Joch (4) aufgebrachter Erregerwicklung (6) aufweist, **dadurch gekennzeichnet, daß** die Magnetkreise (1, 2, 3) benachbarter Magnetantriebe eine Vormagnetisierung in gleicher Polarität und von zumindest annähernd gleicher Stärke aufweisen, wobei diese Vormagnetisierung die gleiche Polarität wie die Erregung durch Stromfluß in der Erregerwicklung (6) aufweist.

2. Anordnung nach Anspruch 1, **dadurch gekennzeichnet, daß** die Vormagnetisierung mit Permanentmagneten (7, 8) erfolgt.

3. Anordnung nach Anspruch 2, **dadurch gekennzeichnet, daß** die Permanentmagnete (7, 8) an beiden Schenkeln eines U-förmigen Jochs (4) angeordnet sind.

4. Anordnung nach Anspruch 2, **dadurch gekennzeichnet., daß** ein hufeisenförmiger Permanentmagnet jeweils ein U-förmiges Joch umgibt.

5. Anordnung nach Anspruch 2, **dadurch gekennzeichnet., daß** ein Stabmagnet jeweils ein doppel-T-förmiges Joch eingesetzt ist.

6. Anordnung nach Anspruch 1, **dadurch gekennzeichnet, daß** die Vormagnetisierung durch Beaufschlagung der Erregerwicklungen (6) mit einem Sockelstrom in Höhe eines Bruchteils des Erregerstroms erfolgt.

7. Anordnung nach Anspruch 1, **dadurch gekennzeichnet, daß** die Vormagnetisierung durch ein für alle Magnetkreise (1, 2, 3) gleiches externes Magnetfeld erfolgt.

## Claims

1. An in-line array of solenoid drives of miniaturized solenoid valves, in which each solenoid drive includes a magnetic circuit (1, 2, 3) with a yoke (4), a movable armature (5), and an excitation winding (6) applied on the yoke (4), **characterized in that** the magnetic circuits (1, 2, 3) of neighboring solenoid drives have a pre-magnetization of the same polarity and of at least approximately the same strength, this pre-magnetization having the same polarity as the excitation caused by current flow in the excitation winding (6).

2. The array according to claim 1, **characterized in that** the pre-magnetization is carried out by means of permanent magnets (7, 8).

3. The array according to claim 2, **characterized in that** the permanent magnets (7, 8) are arranged on both legs of a U-shaped yoke (4).

4. The array according to claim 2, **characterized in that** a respective horseshoe-shaped permanent magnet each surrounds a U-shaped yoke.

5. The array according to claim 2, **characterized in that** a respective bar magnet each is inserted in a double-T-shaped yoke.

6. The array according to claim 1, **characterized in that** the pre-magnetization is effected by applying a pedestal current in the amount of a fraction of the exciting current to the excitation windings (6).

7. The array according to claim 1, **characterized in that** the pre-magnetization is effected by an external magnetic field which is the same for all magnetic circuits (1, 2, 3).

## Revendications

1. Agencement d'entraînements magnétiques disposés en série d'électrovalves miniaturisées, chaque entraînement magnétique comportant un circuit magnétique (1, 2, 3) qui présente une culasse (4), une armature mobile (5) et un enroulement d'excitation (6) agencé sur la culasse (4), **caractérisé en ce que** les circuits magnétiques (1, 2, 3) d'entraînements magnétiques adjacents présentent une pré-magnétisation de polarité identique et d'une intensité au moins approximativement identique, cette pré-magnétisation présentant la même polarité que l'excitation par flux de courant dans l'enroulement d'excitation (6).

2. Agencement selon la revendication 1, **caractérisé en ce que** la pré-magnétisation est effectuée au moyen d'aimants permanents (7, 8).

3. Agencement selon la revendication 2, **caractérisé en ce que** les aimants permanents (7, 8) sont agencés sur les deux branches d'une culasse (4) en forme de U.

4. Agencement selon la revendication 2, **caractérisé en ce qu'**un aimant permanent en forme de fer à cheval entoure une culasse en forme de U respective.

5. Agencement selon la revendication 2, **caractérisé en ce qu'**un barreau magnétique est respectivement inséré dans une culasse en forme de double T.

6. Agencement selon la revendication 1, **caractérisé en ce que** la pré-magnétisation est effectuée par sollicitation des enroulements d'excitation (6) avec un courant de base d'un montant d'une fraction du courant d'excitation.

7. Agencement selon la revendication 1, **caractérisé en ce que** la pré-magnétisation est effectuée au moyen d'un champ magnétique externe identique pour tous les circuits magnétiques (1, 2, 3).
